# EUROPÄISCHE PATENTSCHRIFT

(11) **EP 2 577 844 B1**
(45) Veröffentlichungstag und Bekanntmachung des Hinweises auf die Patenterteilung: **16.07.2014**
(21) Anmeldenummer: 11708996.1
(22) Anmeldetag: 02.03.2011
(51) Int. Cl.: H02J 7/14, H02J 7/34, B60R 16/03

(54) **BORDNETZ FÜR EIN KRAFTFAHRZEUG, KRAFTFAHRZEUG UND VERFAHREN ZUM BETREIBEN EINES BORDNETZES**
VEHICLE ELECTRIC SYSTEM FOR A MOTOR VEHICLE, MOTOR VEHICLE, AND METHOD FOR OPERATING A VEHICLE ELECTRIC SYSTEM
RÉSEAU DE BORD POUR UN VÉHICULE AUTOMOBILE, VÉHICULE AUTOMOBILE ET PROCÉDÉ POUR FAIRE FONCTIONNER UN RÉSEAU DE BORD

(30) Priorität: 25.05.2010 DE 102010021403
(43) Veröffentlichungstag der Anmeldung: 10.04.2013
(73) Patentinhaber: Audi AG, 85045 Ingolstadt (DE)
(72) Erfinder: WINKLER, Josef, 85110 Kipfenberg (DE)
(74) Vertreter: Herbst, Matthias Heinz
(86) Internationale Anmeldenummer: PCT/EP2011/001015
(87) Internationale Veröffentlichungsnummer: WO 2011/147493

(56) Entgegenhaltungen:
- EP-A1- 1 366 948
- WO-A1-02/066293
- DE-A1- 19 859 036
- DE-A1-102005 015 995
- DE-A1-102005 042 154
- DE-A1-102007 026 164
- DE-A1-102009 024 374
- DE-B4-102006 010 713
- US-A1- 2007 096 564
- "Künftige Bordnetze" In: "Autoelektrik Autoelektronik", Oktober 2002 (2002-10), Robert Bosch GmbH, Stuttgart (DE), XP002655208, ISBN: 3-528-13872-6 Seite 16-19, in der Anmeldung erwähnt Abbildungen 7,9

## Beschreibung

Die Erfindung betrifft ein Bordnetz für ein Kraftfahrzeug. Das Bordnetz umfasst eine Fahrzeugbatterie, einen elektrischen Verbraucher sowie einen Energiespeicher mit einem positiven und einem negativen Anschluss. Es sind Schaltmittel bereitgestellt, die in einem ersten Schaltzustand den positiven Anschluss des Energiespeichers mit der Fahrzeugbatterie und den negativen Anschluss des Energiespeichers mit dem elektrischen Verbraucher koppeln und in zumindest einen von dem ersten Schaltzustand verschiedenen weiteren Schaltzustand verbracht werden können. Eine Steuereinrichtung kann die Schaltmittel zwischen dem ersten und dem weiteren Schaltzustand schalten. Die Erfindung betrifft außerdem ein Kraftfahrzeug mit einem solchen Bordnetz sowie ein Verfahren zum Betreiben eines Bordnetzes eines Kraftfahrzeugs.

In Kraftfahrzeugen werden heutzutage zunehmend elektrische Verbraucher eingesetzt, die zum Bereitstellen von Funktionalitäten dienen, welche für die Sicherheit der Fahrzeuginsassen relevant sind. Solche Sicherheitsverbraucher verbrauchen in der Regel hohe Leistungen, benötigen jedoch insgesamt geringe Energien. Solche elektrischen Verbraucher werden als Ersatz für mechanische oder hydraulische Systeme verwendet, um einen geringeren Kraftstoffverbrauch bei verbesserter Funktionalität zu erreichen. Es geht hier im Wesentlichen um Elektromotoren, die zum Beispiel für die Lenkung, für einen Parkriegel einer Parksperre oder auch in einem Bremssystem (zum Beispiel dem ESP, dem "Elektronischen Stabilitätsprogramm") eingesetzt werden. Es kann sich hier aber auch um elektronische Geräte handeln, wie beispielsweise Kommunikationseinrichtungen (zum Beispiel Mobiltelefone) zum Absetzen eines Notrufs. Auf der einen Seite soll die elektrische Versorgung dieser Verbraucher stets gewährleistet werden; auf der anderen Seite ist die Stromaufnahme dieser elektrischen Verbraucher jedoch nicht konstant, da diese nur bei Bedarf eingeschaltet werden, so dass sensible Verbraucher des Bordnetzes in ihrem Betrieb beeinträchtigt werden.

Das Bordnetz eines Kraftfahrzeugs besteht im einfachsten Fall aus einer Fahrzeugbatterie, einem Generator und einer Vielzahl von (sensiblen) Energieverbrauchern. Bei laufendem Motor stellt der Generator eine elektrische Spannung bereit, mit welcher die Verbraucher versorgt und die Fahrzeugbatterie aufgeladen werden können. Auch kann die vom Generator abgegebene Leistung durch eine Regelung an den jeweils augenblicklichen Strombedarf der elektrischen Verbraucher angepasst werden. Jedoch belasten die neuartigen elektrischen (Sicherheits-)Verbraucher das Bordnetz mit hohen pulsförmigen Strömen. Derzeit eingesetzte Generatoren sind zu träge, um diese pulsförmigen Ströme bereitzustellen bzw. die Spannung schnell zu erhöhen oder zu erniedrigen. Die Bordnetzspannung wird daher hauptsächlich durch die Fahrzeugbatterie stabilisiert, und die Stabilität der Bordnetzspannung wird durch den Innenwiderstand der Fahrzeugbatterie bestimmt. Bei den hohen pulsförmigen Strömen kann die Bordnetzspannung um mehrere Volt einbrechen, so dass sensible Verbraucher in ihrer Funktion vorübergehend gestört werden. Ein solches Verhalten ist insbesondere auch bei den neuen Start-/Stopp-Systemen in Kraftfahrzeugen sehr problematisch.

Es wurden in der Vergangenheit unterschiedliche Systeme zur Reduzierung der Spannungseinbrüche und zum Schutz sensibler Verbraucher entwickelt. Die meisten dieser Systeme verwenden Doppelschichtkondensatoren oder Batterien als zusätzliche Energiespeicher für das Bordnetz. In vielen bisherigen Systemen wird der zusätzliche Energiespeicher parallel zur Fahrzeugbatterie geschaltet; durch diese Parallelschaltung wird die Gesamtimpedanz reduziert, und der Spannungseinbruch des Bordnetzes wird geringer. Solche Bordnetze sind beispielsweise aus den Druckschriften DE 10 2005 015 995 A1 sowie DE 10 2007 026 164 A1 bekannt.

Die Zuschaltung eines zusätzlichen Energiespeichers kann auch unter Vermittlung eines Gleichspannungswandlers erfolgen, wie dies in den Druckschriften WO 02/066293 A1 und DE 198 59 036 A1 beschrieben ist.

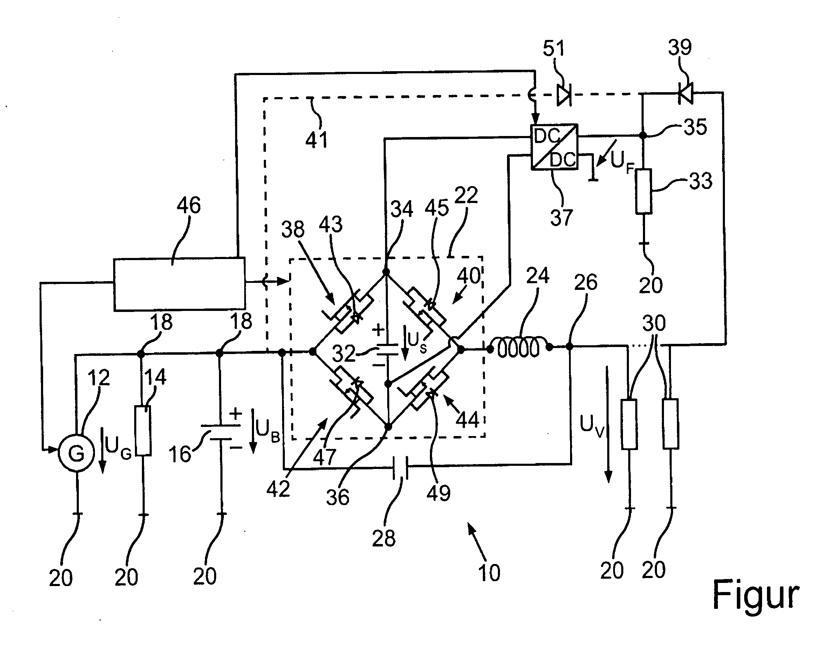

Es ist außerdem Stand der Technik, die sensiblen Verbraucher direkt durch den zusätzlichen Energiespeicher zu versorgen und somit von den Hochleistungsverbrauchern zu entkoppeln. Eine solche Vorgehensweise ist zum Beispiel in Robert Bosch GmbH, "Autoelektrik, Autoelektronik, Systeme und Komponenten", 4. Auflage, Vieweg Verlag, Wiesbaden, ISBN 3-528-13872-6, Seite 16, Abbildung 7, beschrieben.

Ein gegenwärtiger Trend geht dahin, einen zusätzlichen Energiespeicher, wie zum Beispiel einen Doppelschichtkondensator, in Reihe zur Fahrzeugbatterie zu schalten. Ein solches Bordnetz ist aus dem Dokument Continental, ELKS 2008 - "Elektrische Leistungsbordnetze und Komponenten von Straßenfahrzeugen", Beiträge zum gleichnamigen ersten Symposium vom 8. und 9. Oktober 2008, TU Braunschweig, ISBN: 978-3-937655-17-8, Seite 90, bekannt. Bei diesem Bordnetz wird der Spannungseinbruch bei einem Motorstart dadurch kompensiert, dass ein Doppelschichtkondensator in Reihe zu der Fahrzeugbatterie geschaltet wird. Durch diese Reihenschaltung kann also - im Idealzustand, wenn der Starter nicht betätigt wird - eine solche Spannung an den Verbrauchern bereitgestellt werden, die größer als die Batteriespannung ist. Demnach erfolgt eine Unterspannungskompensation. Eine Reihenschaltung aus einer Fahrzeugbatterie und einem Doppelschichtkondensator ist ebenfalls aus der Druckschrift DE 10 2005 042 154 A1 bekannt.

Der gesamte Stand der Technik beschäftigt sich mit der Problematik, Spannungseinbrüche im Bordnetz zu kompensieren. Es ist eine besondere Herausforderung, ohne viel Aufwand, nämlich insbesondere ohne Einsatz eines teuren Gleichspannungswandlers, nicht nur die Spannungseinbrüche kompensieren zu können, sondern auch im Bordnetz auftretende Überspannungen zu vermeiden. Eine Abhilfe schafft hier ein Bordnetz, welches Gegenstand der nach dem Anmeldetag der vorliegenden Anmeldung veröffentlichten DE 10 2009 024 374 A ist. Bei diesem Bordnetz sind Schaltmittel bereitgestellt, die den positiven Anschluss eines Energiespeichers mit der Fahrzeugbatterie und den negativen Anschluss dieses Energiespeichers mit einem elektrischen Verbraucher koppeln können. Es kann somit bedarfsabhängig eine Spannung an dem elektrischen Verbraucher bereitgestellt werden, die niedriger als die an der Fahrzeugbatterie anliegende elektrische Spannung ist, sei diese eine Batteriespannung oder eine Generatorspannung eines parallel zur Fahrzeugbatterie geschalteten Generators. Diese niedrigere Spannung wird mit dem zusätzlichen Energiespeicher erreicht, nämlich zum Beispiel einem Doppelschichtkondensator (auch unter der Bezeichnung Super-Cap bekannt), also ohne Einsatz eines teuren Gleichspannungswandlers. Dieses bekannte Bordnetz hat den Vorteil, dass - insbesondere wenn ein Generator parallel zur Batterie gekoppelt ist - eine Überspannung am elektrischen Verbraucher kompensiert werden kann. Eine solche Überspannung kann zum Beispiel dann entstehen, wenn ein parallel zur Fahrzeugbatterie gekoppelter elektrischer Hochleistungsverbraucher abgeschaltet wird. In diesem Falle entsteht eine Spannung im Bordnetz, die größer als die im Normalbetrieb vom Generator erzeugte Spannung ist. Bei einer solchen Überspannung ist der Generator alleine nicht in der Lage, diese schnell genug zu kompensieren.

Nun, wenn ein zuverlässiger Betrieb der sensiblen Verbraucher durch die in der DE 10 2009 024 374 A vorgeschlagene Lösung gewährleistet ist, gilt das Interesse einer zuverlässigen Versorgung derjenigen Verbraucher mit elektrischer Energie, deren Funktionen für die Sicherheit der Fahrzeuginsassen relevant sind. Derartige Verbraucher benötigen nämlich zumindest zwei separate beziehungsweise redundante Energiequellen, die unabhängig voneinander elektrische Energie liefern können. Es soll nämlich gewährleistet werden, dass auch bei Ausfall einer Energiequelle diese Verbraucher versorgt werden können, und zwar mit Energie aus der jeweils anderen Energiequelle. Ein Bordnetz mit zwei separaten Systemen - einem Primärsystem und einem Sekundärsystem - zur redundanten Versorgung von sicherheitsrelevanten Verbrauchern ist bereits beispielsweise aus der Druckschrift DE 10 2006 010 713 B4 bekannt. Der sicherheitsrelevante Verbraucher kann wahlweise mit elektrischer Energie aus einer Fahrzeugbatterie oder aber aus einem Doppelschichtkondensator versorgt werden. In diesem Bordnetz auftretende Überspannungen können jedoch nicht kompensiert werden.

Es ist Aufgabe der Erfindung, einen Weg aufzuzeigen, wie bei einem speziellen Bordnetz der eingangs genannten Gattung, bei welchem in dem Bordnetz auftretende Überspannungen kompensiert werden können, ohne viel Kostenaufwand zusätzlich auch ein zuverlässiger Betrieb eines weiteren elektrischen Verbrauchers gewährleistet werden kann.

Diese Aufgabe wird erfindungsgemäß durch ein Bordnetz mit den Merkmalen gemäß Patentanspruch 1 sowie durch ein Kraftfahrzeug mit den Merkmalen gemäß Patentanspruch 9 gelöst, wie auch durch ein Verfahren mit den Merkmalen gemäß Patentanspruch 10.

Also weist das erfindungsgemäße Bordnetz - neben dem (sensiblen) elektrischen Verbraucher - auch einen weiteren Verbraucher auf, welcher im Kraftfahrzeug vorzugsweise eine Funktionalität bereitstellt, die für die Sicherheit der Fahrzeuginsassen relevant ist. Dieser weitere Verbraucher kann mit einer an der Fahrzeugbatterie und/oder dem (ersten) elektrischen Verbraucher anliegenden Spannung versorgt werden. Er kann also im Wesentlichen mit elektrischer Energie aus der Fahrzeugbatterie versorgt werden. Ein Gleichspannungswandler ist mit dem positiven und dem negativen Anschluss des Energiespeichers einerseits und mit dem weiteren Verbraucher andererseits gekoppelt. Der Gleichspannungswandler greift eine am Energiespeicher anliegende elektrische Spannung ab und kann diese abgegriffene Spannung in eine Versorgungsspannung umwandeln, mit welcher der weitere Verbraucher redundant versorgt werden kann.

Der Energiespeicher übernimmt somit erfindungsgemäß insgesamt zwei verschiedene Funktionen im Bordnetz: Er kann einerseits zum Kompensieren von Überspannungen dienen, nämlich wenn sein positiver Anschluss mit dem positiven Anschluss der Fahrzeugbatterie und sein negativer Anschluss mit dem elektrischen Verbraucher gekoppelt werden; andererseits wird mit dem Energiespeicher eine redundante Energiequelle für den weiteren Verbraucher geschaffen. Das erfindungsgemäße Bordnetz kommt dabei - für die Funktion der Stabilisierung der elektrischen Spannung, wie auch für die Funktion der redundanten Energieversorgung des weiteren Verbrauchers - mit nur einem einzigen Energiespeicher (außer der Fahrzeugbatterie) aus. Das Bordnetz kann folglich entsprechend kompakt aufgebaut werden und ist im Vergleich zum Stand der Technik sehr kostengünstig.

Die redundante Energieversorgung des weiteren Verbrauchers wird durch Einsatz des Gleichspannungswandlers (DC-DC-Wandler) ermöglicht. Dieser kann nämlich die am Energiespeicher bereitgestellte Spannung in eine Versorgungsspannung umwandeln, mit welcher der Verbraucher bedarfsgerecht versorgt werden kann. Der Gleichspannungswandler stellt die Versorgungsspannung vorzugsweise lediglich in einem Notfall bereit, nämlich insbesondere beim Ausfall der Fahrzeugbatterie beziehungsweise bei einer leeren Fahrzeugbatterie. Der Gleichspannungswandler wird somit in einem Normalbetrieb des Bordnetzes bevorzugt überhaupt nicht in Betrieb genommen und wird demnach nur kurzzeitig überlastet. Er kann somit zum Betrieb mit geringen Energien - und nur mit hohen Leistungen - ausgelegt und entsprechend kostengünstig gefertigt werden.

Bevorzugt stellt der weitere Verbraucher eine Funktionalität im Kraftfahrzeug bereit, die für die Sicherheit der Fahrzeuginsassen relevant ist. Er ist insbesondere ein solcher elektrischer Verbraucher, der einen Einfluss auf das Fahrverhalten und/oder die Fahrfähigkeit des Kraftfahrzeugs hat. Er kann zum Beispiel ein Elektromotor sein, nämlich insbesondere für eine Lenkung, einen Parkriegel einer Parksperre oder aber für ein Bremssystem (zum Beispiel das ESP). Dieser Verbraucher kann aber auch ein elektronisches Gerät sein, wie beispielsweise eine Kommunikationseinrichtung (zum Beispiel ein Mobiltelefon) zum Absetzen eines Notrufs. Der weitere Verbraucher ist bevorzugt ein Hochleistungsverbraucher, welcher kurzzeitig hohe Leistungen (bei einer Spannung von zum Beispiel 12 V), jedoch insgesamt geringe Energien verbraucht.

Prinzipiell kann der weitere Verbraucher entweder auf der einen Seite oder aber auf der anderen Seite der Schaltmittel angeordnet sein. Er kann also entweder elektrisch parallel zu der Fahrzeugbatterie und gegebenenfalls einem Generator oder aber parallel zum (ersten) elektrischen Verbraucher geschaltet sein. Es erweist sich jedoch als besonders vorteilhaft, wenn redundant versorgte Verbraucher über die Schaltmittel mit der Fahrzeugbatterie gekoppelt ist und somit im Wesentlichen parallel zum (ersten) elektrischen Verbraucher liegt. Dann kann - wenn der weitere Verbraucher mit elektrischer Spannung der Fahrzeugbatterie und/oder des Generators versorgt wird - die an diesem Verbraucher anliegende Spannung mithilfe des Energiespeichers gegebenenfalls stabilisiert werden.

Es kann eine Entkoppelungseinrichtung zwischen dem redundant versorgten Verbraucher und der Fahrzeugbatterie und/oder zwischen dem redundant versorgten Verbraucher und dem (ersten) elektrischen Verbraucher geschaltet sein. Eine solche Entkopplungseinrichtung kann dann einen Stromfluss von dem redundant versorgten Verbraucher hin zu der Fahrzeugbatterie beziehungsweise zu dem elektrischen Verbraucher verhindern. Auf diesem Wege gelingt es, den weiteren Verbraucher zuverlässig mit elektrischer Energie aus dem Energiespeicher zu versorgen, ohne dass elektrischer Strom zum (ersten) elektrischen Verbraucher und/oder zur Fahrzeugbatterie fließt und so dem weiteren Verbraucher entnommen wird.

Eine besonders kostengünstige und kompakte Entkopplungseinrichtung umfasst eine Diode, deren Kathode mit dem weiteren Verbraucher und deren Anode mit der Fahrzeugbatterie und/oder dem (ersten) elektrischen Verbraucher gekoppelt sind. Dann ist der Stromfluss vom weiteren Verbraucher beziehungsweise vom Gleichspannungswandler hin zum (ersten) elektrischem Verbraucher und/oder zur Fahrzeugbatterie sicher blockiert.

Wie bereits ausgeführt, soll der weitere Verbraucher kurzzeitig hohe Leistungen verbrauchen dürfen. Er kann zum Betrieb mit einer Spannung mit einer Amplitude aus einem Wertebereich von 10,8 V bis 17 V, insbesondere mit der Nennspannung der Fahrzeugbatterie, ausgelegt sein. Entsprechend kann der Gleichspannungswandler einen Hochsetzsteller umfassen. Ein solcher Hochsetzsteller kann für den weiteren Verbraucher die Versorgungsspannung mit einer Amplitude bereitstellen, die größer als die Amplitude der am Energiespeicher abgegriffenen Spannung - insbesondere gleich dem Nennspannungswert der Fahrzeugbatterie - ist. Dann ist der Betrieb des weiteren Verbrauchers auf bei einer leeren Fahrzeugbatterie gewährleistet.

Also kann der weitere Verbraucher nur in einem Notfall mit elektrischer Energie aus dem Energiespeicher versorgt werden, und zwar dann, wenn die Fahrzeugbatterie leer oder anderweitig ausgefallen ist. Die Steuereinrichtung kann einen leeren Zustand der Fahrzeugbatterie erkennen und die Schaltmittel dann in einen Schaltzustand verbringen, in welchem der Energiespeicher sowohl von der Fahrzeugbatterie als auch von dem elektrischen Verbraucher elektrisch entkoppelt ist. Dann steht die gesamte im Energiespeicher gespeicherte Energie nur für den weiteren Verbraucher zur Verfügung, und dieser Verbraucher kann in Betrieb genommen werden.

Nachfolgend werden Ausführungsformen betreffen die Ausgestaltung der Schaltmittel, wie auch betreffend die Kompensation von Über- und Unterspannungen im Bordnetz näher beschrieben:
In einer Ausführungsform ist vorgesehen, dass die Schaltmittel in einem zweiten Schaltzustand die Fahrzeugbatterie mit dem elektrischen Verbraucher koppeln. Dann ist der Energiespeicher überbrückt, und an dem elektrischen Verbraucher - und gegebenenfalls auch am weiteren Verbraucher - liegt dieselbe elektrische Spannung an, wie an der Fahrzeugbatterie. Dieser zweite Schaltzustand der Schaltmittel kann bei einem Normalbetrieb des Bordnetzes vorgesehen sein, in welchem der elektrische Verbraucher direkt mit der Fahrzeugbatterie - und bevorzugt auch mit einem parallel zur Fahrzeugbatterie geschalteten Generator - verbunden ist. Tritt zum Beispiel eine Überspannung im Bordnetz auf, so können die Schaltmittel von dem zweiten Schaltzustand in den ersten Schaltzustand verbracht werden, und die Überspannung kann kompensiert werden.

Die Steuereinrichtung kann durch entsprechende Ansteuerung der Schaltmittel eine solche elektrische Spannung an dem elektrischen Verbraucher - und gegebenenfalls auch am weiteren Verbraucher - bereitstellen, deren Mittelwert in einem Wertebereich von U_{B} - U_{S} bis U_{B} liegt. Dabei bezeichnen U_{B} eine an der Fahrzeugbatterie anliegende Spannung - sei diese die Generatorspannung oder die Batteriespannung - und U_{S} eine durch den Energiespeicher bereitgestellte Spannung. Dies kann zum Beispiel so gestaltet werden, dass die Steuereinrichtung die Schaltmittel abwechselnd mit einer vorbestimmten Frequenz zwischen dem ersten und dem zweiten Schaltzustand schaltet. Durch entsprechende Auswahl des Verhältnisses der Zeit, während welcher der Energiespeicher zwischen der Fahrzeugbatterie und dem elektrischen Verbraucher geschaltet ist, zu der Zeit, in welcher der Energiespeicher überbrückt ist, kann ein beliebiger Mittelwert der Spannung an dem elektrischen Verbraucher in dem oben angegebenen Wertebereich eingestellt werden. Somit ist es möglich, eine beliebige Überspannung, sei es eine geringe oder auch eine hohe Überspannung, zu kompensieren. Es muss lediglich der Mittelwert entsprechend eingestellt werden. Dies kann zum Beispiel in einem solchen Ablauf umgesetzt werden: Der elektrische Verbraucher ist ein sensibler Verbraucher, zum Beispiel ein Radiogerät. Ein Elektromotor eines Lenksystems - als Hochleistungsverbraucher - und ein Generator sind parallel zur Fahrzeugbatterie gekoppelt. Der Fahrer des Kraftfahrzeugs fährt zunächst geradeaus, so dass der Elektromotor nicht betätigt wird. Während dieser Zeit sind die Fahrzeugbatterie und der parallel dazu geschaltete Generator direkt mit dem Radio verbunden, d. h. der Energiespeicher ist überbrückt. Die Steuereinrichtung regelt in diesem Normalbetrieb den Generator so, dass er eine Bordnetzspannung von zum Beispiel 14,5 Volt bereitstellt. Der Fahrer lenkt nun das Fahrzeug nach links, und der Elektromotor des Lenksystems wird in Betrieb genommen. Während des Betriebs des Elektromotors erhöht der Generator die Bordnetzspannung, so dass diese von dem Wert 14,5 Volt nicht abweicht. Ist das Lenkmanöver abgeschlossen, wird der Elektromotor abgeschaltet, und die Bordnetzspannung erhöht sich zum Beispiel auf 17 Volt. Der Generator ist zu langsam, um diese Überspannung schnell zu kompensieren. Die Steuereinrichtung schaltet nun die Schaltmittel abwechselnd zwischen dem ersten und dem zweiten Schaltzustand, nämlich derart, dass durch den Energiespeicher die Bordnetzspannung wieder auf 14,5 Volt reduziert wird. Die Schaltmittel werden also so abwechselnd zwischen dem ersten und dem zweiten Schaltzustand geschaltet, dass von dem Energiespeicher - welcher eine maximale Spannung von z.B. 5 Volt bereitstellen kann - eine Spannung mit einem Mittelwert von -2,5 Volt bereitgestellt wird. Somit ist gewährleistet, dass die Bordnetzspannung selbst nach Abschalten des Antriebsmotors auf 14,5 Volt eingestellt wird.

Es kann vorgesehen sein, dass die Schaltmittel in einem dritten Schaltzustand den positiven Anschluss des Energiespeichers mit dem elektrischen Verbraucher - und gegebenenfalls auch dem weiteren Verbraucher - und den negativen Anschluss des Energiespeichers mit der Fahrzeugbatterie koppeln. Dann ist an dem elektrischen Verbraucher auch eine solche Spannung möglich, die größer als die an der Fahrzeugbatterie anliegende Spannung ist. Diese Ausführungsform wird dazu verwendet, Spannungseinbrüche - die im Bordnetz zum Beispiel durch Zuschalten eines Hochleistungsverbrauchers entstehen - ausgleichen zu können. Insbesondere wenn ein Generator parallel zu der Fahrzeugbatterie geschaltet ist, kann durch Verbringen der Schaltmittel in den dritten Schaltzustand eine Unterspannung schnell kompensiert werden. Ein Generator ist nämlich zu träge, durch Hochleistungsverbraucher verursachte Spannungseinbrüche schnell auszugleichen. Sensible elektrische Verbraucher schalten in der Regel dann ab, wenn die Bordnetzspannung 10,8 Volt unterschreitet. Ein besonderer Vorteil dieser Ausführungsform besteht somit darin, dass das Abschalten von sensiblen Verbrauchern bei Auftreten eines Spannungseinbruchs vermieden werden kann. Somit sind bei dieser Ausführungsform die Schaltmittel zumindest zwischen dem ersten Schaltzustand, in welchem der positive Anschluss des Energiespeichers mit der Fahrzeugbatterie gekoppelt ist, und dem dritten Schaltzustand, in welchem der Energiespeicher umgekehrt gepolt ist, schaltbar. Eine solche Kombination ermöglicht die Kompensation sowohl einer Überspannung als auch einer Unterspannung im Bordnetz. Kommt dazu noch der zweite Schaltzustand, in welchem der Energiespeicher überbrückt ist, so kann die Spannung am elektrischen Verbraucher beliebig in einem Wertebereich von U_{B} - U_{S} bis U_{B} +U_{S} eingestellt werden.

Der dritte Schaltzustand der Schaltmittel kann auch in Verbindung mit dem ersten Schaltzustand zum Vorheizen des Energiespeichers auf eine bestimmte Temperatur bei Inbetriebnahme des Bordnetzes und/oder bei einem Übergang von einem Betriebszustand in einen anderen Betriebszustand des Bordnetzes dienen. Es kann nämlich vorgesehen sein, dass die Schaltmittel während einer Vorheizphase des Energiespeichers und/oder bei einem Übergang von einem Betriebszustand in einen anderen Betriebszustand abwechselnd zwischen dem ersten und dem dritten Schaltzustand geschaltet werden. Dann wird der Energiespeicher mehrmals aufgeladen und wieder entladen, bis er auf eine bestimmte Betriebstemperatur aufgeheizt wird.

Die Steuereinrichtung kann durch Ansteuerung der Schaltmittel eine elektrische Spannung an dem elektrischen Verbraucher bereitstellen, deren Mittelwert in einem Wertebereich von U_{B} bis U_{B} + U_{S} liegt. Dies kann zum Beispiel dadurch erreicht werden, dass die Steuereinrichtung die Schaltmittel abwechselnd zwischen dem dritten Schaltzustand, in welchem der positive Anschluss des Energiespeichers mit dem Verbraucher gekoppelt ist, und dem zweiten Schaltzustand schaltet, in welchem der Energiespeicher überbrückt ist.

So kann also ein beliebiger Spannungseinbruch im Bordnetz durch entsprechendes Schalten der Schaltmittel ausgeglichen werden, nämlich zum Beispiel auf eine solche Art und Weise: Der Fahrer fährt mit dem Kraftfahrzeug geradeaus. Während dieser Zeit bleibt ein Elektromotor eines Bremssystems - der parallel zur Fahrzeugbatterie gekoppelt ist - ausgeschaltet. Die Steuereinrichtung regelt die vom Generator erzeugte Bordnetzspannung auf 14,5 Volt. Der Fahrer betätigt nun die Bremse des Kraftfahrzeugs. Der Antriebsmotor im Bremssystem wird aktiviert, und die Bordnetzspannung bricht zu Beginn dieses Manövers ein, nämlich zum Beispiel auf 12 Volt. Da der Generator zu langsam ist, um diesen Spannungseinbruch schnell auszugleichen, schaltet die Steuereinrichtung die Schaltmittel abwechselnd zwischen dem zweiten und dem dritten Schaltzustand so, dass die Bordnetzspannung wieder auf 14,5 Volt eingestellt wird. Somit wird der Generatorspannung von 12 Volt die Spannung des Energiespeichers - zum Beispiel von 5 Volt - periodisch aufaddiert, so dass durch entsprechendes Schalten der Schaltmittel eine Spannung am elektrischen Verbraucher mit einem Mittelwert von 14,5 Volt bereitgestellt werden kann. Damit werden sensible Verbraucher in ihrem Betrieb nicht beeinträchtigt.

Es kann auch ein vierter Schaltzustand der Schaltmittel vorgesehen sein, in welchem die Schaltmittel den elektrischen Verbraucher von der Fahrzeugbatterie trennen.

Es hat sich als besonders vorteilhaft herausgestellt, wenn ein Tiefpassfilter mit den Schaltmitteln gekoppelt ist. Ein solcher Filter kann eine mit den Schaltmitteln in Reihe gekoppelte Spule aufweisen, wie auch einen parallel zu der Reihenschaltung der Schaltmittel und der Spule gekoppelten Kondensator. Dann kann an dem elektrischen Verbraucher eine geglättete Spannung bereitgestellt werden, d. h. eine Gleichspannung. Die Amplitude dieser Gleichspannung entspricht dann dem Mittelwert der Summe der an der Batterie anliegenden Spannung und der durch den Energiespeicher bereitgestellten Spannung.

Es kann ein Generator parallel zu der Fahrzeugbatterie geschaltet sein. Dann kann die Parallelschaltung der Fahrzeugbatterie und des Generators über die Schaltmittel mit dem elektrischen Verbraucher gekoppelt werden. Durch entsprechende Ansteuerung der Schaltmittel kann hier die Spannung an dem elektrischen Verbraucher dann stabilisiert werden, wenn ein Hochleistungsverbraucher parallel zum Generator zugeschaltet oder abgeschaltet wird.

Ist ein Generator zum Erzeugen einer Generatorspannung parallel zu der Fahrzeugbatterie gekoppelt, so kann vorgesehen sein, dass die Steuereinrichtung die Schaltmittel abhängig von dem jeweils augenblicklichen Wert der Generatorspannung ansteuert. Die Steuereinrichtung kann zum Beispiel die an dem elektrischen Verbraucher anliegende Spannung auf einen Sollwert regeln, nämlich durch entsprechende Ansteuerung der Schaltmittel. Bricht die Generatorspannung ein, so kann die Steuereinrichtung diesen Spannungseinbruch durch entsprechendes Zuschalten des Energiespeichers kompensieren. Liegt eine Überspannung am Generator vor, so kann diese ebenfalls durch entsprechende Ansteuerung der Schaltmittel - wie oben ausgeführt - kompensiert werden.

In einer Ausführungsform - in welcher ein Generator zum Erzeugen einer Generatorspannung parallel zur Fahrzeugbatterie gekoppelt ist und die Steuereinrichtung in einem Normalbetrieb die Generatorspannung auf einen ersten Wert einstellt, der größer als die Nennspannung der Fahrzeugbatterie ist - ist vorgesehen, dass die Steuereinrichtung in einem Regenerationsbetrieb die Generatorspannung auf einen vorbestimmten zweiten Wert erhöht, der größer als der erste Wert ist. Im Regenerationsbetrieb wird also die Generatorspannung deutlich höher als die Nennspannung der Fahrzeugbatterie eingestellt. In einem solchen Regenerationsbetrieb wird die während der Lebensdauer der Fahrzeugbatterie gebildete Säureschichtung durch Gasblasenrührung aufgehoben, und die wirksame Kapazität der Fahrzeugbatterie wird erhöht. In diesem Regenerationsbetrieb sinkt auch der Innenwiderstand der Fahrzeugbatterie. Durch das Beaufschlagen der Fahrzeugbatterie mit einer hohen Spannung kann außerdem die Kristallgröße des abgeschiedenen Bleisulfats dahingehend verändert werden, dass es von einer unlöslichen in eine lösliche Form übergeht und dadurch an Lade- und Entladeprozessen wieder teilnehmen kann.

In einer Ausführungsform - in welcher ein Generator zum Erzeugen einer Generatorspannung parallel zur Fahrzeugbatterie gekoppelt ist und die Steuereinrichtung in einem Normalbetrieb die Generatorspannung auf einen ersten Wert einstellt, der größer als die Nennspannung der Fahrzeugbatterie ist - ist vorgesehen, dass die Steuereinrichtung in einem Rekuperationsbetrieb die Generatorspannung auf einen vorbestimmten zweiten Wert erhöht, der größer als der erste Wert ist. Im Rekuperationsbetrieb wird also die Generatorspannung höher als die Nennspannung der Fahrzeugbatterie eingestellt. In einem solchen Regenerationsbetrieb kann die Fahrzeugbatterie aufgeladen werden, wobei die beim Bremsen des Kraftfahrzeugs oder im Schubbetrieb erzeugte kinetische Energie in elektrische Energie umgewandelt und in der Fahrzeugbatterie gespeichert wird. Im Rekuperationsbetrieb werden die Schaltmittel bevorzugt in den zweiten oder den vierten Schaltzustand verbracht, so dass der elektrische Verbraucher mit dem Generator entweder direkt verbunden oder vom Generator entkoppelt wird. Die Zeitdauer des Rekuperationsbetriebs ist bevorzugt geringer als die des Regenerationsbetriebs.

Die Schaltmittel können umfassen:
- einen ersten Schalter, insbesondere einen MOSFET, über welchen die Fahrzeugbatterie mit dem positiven Anschluss des Energiespeichers koppelbar ist,
- einen zweiten Schalter, insbesondere einen MOSFET, über welchen der elektrische Verbraucher mit dem positiven Anschluss des Energiespeichers koppelbar ist,
- einen dritten Schalter, insbesondere einen MOSFET, über welchen die Fahrzeugbatterie mit dem negativen Anschluss des Energiespeichers koppelbar ist, und
- einen vierten Schalter, insbesondere einen MOSFET, über welchen der elektrische Verbraucher mit dem negativen Anschluss des Energiespeichers koppelbar ist.

Durch Einsatz von MOSFETs können beim Umpolen des Energiespeichers hohe Schaltfrequenzen erreicht werden, die mit herkömmlichen Relais nicht erzielt werden können. Vorzugsweise werden solche MOSFETs eingesetzt, bei denen die parasitäre Diode nicht vorhanden ist. Solche MOSFETs sind seit kurzem auf dem Markt erhältlich. Durch Verwendung von solchen MOS-FETs kann eine vollständige Entkopplung zwischen dem Verbraucher und der Fahrzeugbatterie erreicht werden. Es können aber auch herkömmliche MOSFETs eingesetzt werden, nämlich solche mit parasitären Dioden.

Es kann bei den Schaltmitteln - herkömmliche MOSFETs eingesetzt werden - vorgesehen sein, dass:
- eine Kathode einer parasitären Diode des ersten MOSFETs mit dem positiven Anschluss des Energiespeichers und eine Anode dieser Diode mit der Fahrzeugbatterie gekoppelt sind,
- eine Kathode einer parasitären Diode des zweiten MOSFETs mit dem positiven Anschluss des Energiespeichers und eine Anode dieser Diode mit dem elektrischen Verbraucher gekoppelt sind,
- eine Anode einer parasitären Diode des dritten MOSFETs mit dem negativen Anschluss des Energiespeichers und eine Kathode dieser Diode mit der Fahrzeugbatterie gekoppelt sind und
- eine Anode einer parasitären Diode des dritten MOSFETs mit dem negativen Anschluss des Energiespeichers und eine Kathode dieser Diode mit dem elektrischen Verbraucher gekoppelt sind.

Zur Erfindung gehört auch ein Kraftfahrzeug, welches ein solches Bordnetz aufweist.

Das erfindungsgemäße Verfahren dient zum Betreiben eines Bordnetzes eines Kraftfahrzeugs. Es sind eine Spannungserzeugungseinheit (zum Beispiel eine Fahrzeugbatterie oder ein Generator), die eine elektrische Spannung bereitstellt, ein Energiespeicher (zum Beispiel ein Doppelschichtkondensator) und ein elektrischer Verbraucher bereitgestellt. Bei dem Verfahren wird der Energiespeicher für zumindest ein vorbestimmtes erstes Zeitintervall derart mit dem Verbraucher und der Spannungserzeugungseinheit gekoppelt, dass die am Verbraucher anliegende Spannung niedriger als die Spannung der Spannungserzeugungseinheit ist. Ein weiterer elektrischer Verbraucher - insbesondere zum Bereitstellen einer Funktionalität, die für die Sicherheit der Fahrzeuginsassen relevant ist - wird mit der Spannung der Spannungserzeugungseinheit versorgt. Ein Gleichspannungswandler greift eine am Energiespeicher bereitgestellte Spannung ab und wandelt sie in eine Versorgungsspannung um, mit welcher der weitere Verbraucher redundant versorgt werden kann.

Die Erfindung wird nun anhand eines bevorzugten Ausführungsbeispiels näher erläutert, wie auch unter Bezugnahme auf die Zeichnung, wobei die einzige Figur ein Bordnetz eines Kraftfahrzeugs gemäß einer Ausführungsform der Erfindung veranschaulicht.

Ein in der Figur dargestelltes Bordnetz 10 umfasst einen Generator 12, einen parallel zum Generator 12 geschalteten Hochleistungsverbraucher 14 - zum Beispiel einen Starter für eine Brennkraftmaschine - und eine parallel zum Generator 12 gekoppelte Fahrzeugbatterie 16. Die Fahrzeugbatterie 16 ist eine Blausäurebatterie. Der Generator 12, der Hochleistungsverbraucher 14 und die Fahrzeugbatterie 16 sind zwischen einem Primärpol 18 und einem Bezugspotenzial 20 gekoppelt. Die Fahrzeugbatterie 16 weist zum Beispiel eine Nennspannung von etwa 12 Volt auf.

Der Primärpol 18 ist über Schaltmittel 22 und eine Spule 24 mit einem sekundären Pol 26 gekoppelt. Parallel zur Reihenschaltung der Schaltmittel 22 und der Spule 24 ist ein Kondensator 28 geschaltet. Die Spule 24 und der Kondensator 28 bilden einen Tiefpassfilter. Die Induktivität der Spule 24 kann zum Beispiel im Bereich µH liegen. Die Kapazität des Kondensators 28 beträgt zum Beispiel 10 µF.

Zwischen dem Sekundärpol 26 und dem Bezugspotenzial 20 sind eine Vielzahl von sensiblen elektrischen Verbrauchern 30 gekoppelt. Die Verbraucher 30 können zum Beispiel ein Radiogerät, ein Scheinwerfer, ein Elektromotor für einen Scheibenwischer u.ä. sein. Eine zwischen dem Sekundärpol 26 und dem Bezugspotenzial 20, also an den Verbrauchern 30 anliegende elektrische Spannung wird als Bordnetzspannung U_{V} bezeichnet.

An dem Generator 12 liegt eine Generatorspannung U_{G}, und an der Fahrzeugbatterie 16 liegt eine Batteriespannung U_{B}. Aufgrund der Parallelschaltung gilt: U_{G}=U_{B}.

Das Bordnetz 10 umfasst einen Doppelschichtkondensator 32 als Energiespeicher, welcher einen positiven Anschluss 34 sowie einen negativen Anschluss 36 aufweist.

Die Schaltmittel 22 umfassen einen ersten, einen zweiten, einen dritten und einen vierten elektrischen Schalter 38, 40, 42, 44, die als MOSFETs ausgebildet sind. Der positive Anschluss 34 des Doppelschichtkondensators 32 ist über den ersten Schalter 38 mit dem Primärpol 18 und über den zweiten Schalter 40 und über die Spule 24 mit dem Sekundärpol 26 koppelbar. Entsprechend ist der negative Anschluss 36 des Doppelschichtkondensators 32 über den dritten Schalter 42 mit dem Primärpol 18 und über den vierten Schalter 44 mit der Spule 24 koppelbar. Die Kathode einer parasitären Diode 43 des ersten Schalters 38 ist mit dem positiven Anschluss 34 des Doppelschichtkondensators 32 gekoppelt, während ihre Anode mit dem Primärpol 18 gekoppelt ist. Die Kathode einer parasitären Diode 45 des zweiten Schalters 40 ist ebenfalls mit dem positiven Anschluss 34 des Doppelschichtkondensators 32 gekoppelt, während ihre Anode mit dem Sekundärpol 26 gekoppelt ist. Die Kathode einer parasitären Diode 47 des dritten Schalters 42 ist mit dem Primärpol 18 gekoppelt, während ihre Anode mit dem dem negativen Anschluss 36 des Doppelschichtkondensators 32 gekoppelt ist. Schließlich ist die Kathode einer parasitären Diode 49 des vierten Schalters 44 mit dem Sekundärpol 26 gekoppelt, während ihre Anode mit dem negativen Anschluss 36 des Doppelschichtkondensators 32 gekoppelt ist.

An dem Doppelschichtkondensator 32 liegt eine elektrische Spannung U_{S} an.

Es befindet sich im Bordnetz 10 außerdem ein weiterer Verbraucher 33, der im Kraftfahrzeug eine Funktionalität bereitstellt, die für die Sicherheit der Fahrzeuginsassen relevant ist. Er wird nachfolgend als Sicherheitsverbraucher 33 bezeichnet. Der Sicherheitsverbraucher 33 kann ein Elektromotor für eine elektrisch ansteuerbare Handbremse oder für eine Lenkeinrichtung des Kraftfahrzeugs oder aber ein Mobiltelefon zum Absetzen eines Notrufs sein. Er ist ein Hochleistungsverbraucher, der kurzzeitig hohe Leistungen, jedoch insgesamt geringe Energien verbraucht. Der Sicherheitsverbraucher 33 ist einerseits mit dem Bezugspotential 20 und andererseits mit einem Knoten 35 verbunden.

Ein unidirektionaler Gleichspannungswandler 37 ist eingangsseitig sowohl mit dem positiven Anschluss 34 als auch dem negativen Anschluss 36 des Doppelschichtkondensators 32 verbunden. Ausgangsseitig ist der Gleichspannungswandler 37 mit dem Knoten 35 - also dem Sicherheitsverbraucher 33 - sowie dem Bezugspotential 20 verbunden. Der Gleichspannungswandler 37 greift die am Doppelschichtkondensator 32 abfallende Spannung U_{S} ab und wandelt sie in eine Versorgungsspannung U_{F} um, die zwischen dem Knoten 35 und dem Bezugspotential 20, also am Sicherheitsverbraucher 33 anliegt. Der Gleichspannungswandler 37 ist ein Hochsetzsteller und kann somit die Spannung U_{S} in die Spannung U_{F} hochtransformieren. Die Amplitude der Versorgungsspannung U_{F} beträgt beispielsweise 12 V.

Der Sicherheitsverbraucher 33 beziehungsweise der Knoten 35 ist auch mit dem Sekundärpol 26 gekoppelt, nämlich über eine Diode 39, die eine Entkopplungseinrichtung ist. Die Kathode dieser Diode 39 ist mit dem Knoten 35 verbunden, während ihre Anode mit dem Sekundärpol 26 verbunden ist.

Alternativ kann der Knoten 35 beziehungsweise der Sicherheitsverbraucher 33 auch mit dem Primärpol 18 verbunden sein, wie dies in der Figur mit einer gestrichelten Linie 41 dargestellt ist. Dann kann eine Diode 51 als Entkopplungseinrichtung eingesetzt werden, deren Kathode mit dem Knoten 35 und deren Anode mit dem Primärpol 18 verbunden ist.

Es ist eine Steuereinrichtung 46 bereitgestellt, die die Schaltmittel 22 sowie den Gleichspannungswandler 37 ansteuert und die Generatorspannung U_{G} regelt.

In einem ersten Schaltzustand der Schaltmittel 22 sind der erste und der vierte Schalter 38, 44 geschlossen, so dass der positive Anschluss des Doppelschichtkondensators 32 mit dem Primärpol 18 und somit mit der Fahrzeugbatterie 16 gekoppelt ist. In diesem ersten Schaltzustand ist der negative Anschluss 36 des Doppelschichtkondensators 32 über die Spule 24 mit dem Sekundärpol 26 und somit mit den elektrischen Verbrauchern 30 gekoppelt.

In einem zweiten Schaltzustand der Schaltmittel 22 sind der erste und der zweite Schalter 38, 40 geschlossen, d. h. der Doppelschichtkondensator 32 ist überbrückt.

In einem dritten Schaltzustand sind der zweite und der dritte Schalter 40, 42 geschlossen: Der positive Anschluss 34 ist mit der Spule 24 und der negative Anschluss 36 ist mit dem Primärpol 18 gekoppelt.

In einem vierten Schaltzustand sind alle Schalter 38, 40, 42, 44 oder paarweise der erste und der dritte Schalter 38, 42 bzw. der zweite und der vierte Schalter 40, 44 geöffnet. In diesem vierten Zustand ist der Primärpol 18 von dem Sekundärpol 26 getrennt.

Nachfolgend werden mögliche Betriebszustände des Bordnetzes 10, wie es in der Figur dargestellt ist, erläutert:

### Normalbetrieb:

Im Normalbetrieb liefert der Generator 12 eine Spannung von U_{G}= 14,5 Volt. Diese Spannung liegt etwas höher als die Nennspannung der Fahrzeugbatterie 16, um diese nicht zu belasten. Also beträgt auch die an der Fahrzeugbatterie 16 anliegende Spannung U_{B} 14,5 Volt. Im Normalbetrieb sind die Schaltmittel 22 im zweiten Schaltzustand: Der Doppelschichtkondensator 32 ist über die Schalter 38, 40 und/oder über die Schalter 42, 44 überbrückt. Dies bedeutet, dass die Bordnetzspannung U_{V} gleich der Generatorspannung U_{G} ist.

Der Sicherheitsverbraucher 33 wird mit der Bordnetzspannung U_{V} beziehungsweise der Batteriespannung U_{B} versorgt. Der Gleichspannungswandler 37 ist ausgeschaltet.

### Notbetrieb:

Das Bordnetz 10 geht in einen Notbetrieb über, wenn die Steuereinrichtung 46 erkennt, dass die Fahrzeugbatterie 16 ausgefallen ist, also zum Beispiel leer ist. Es kann zu diesem Zwecke eine Erfassungseinrichtung bereitgestellt sein, die die Batteriespannung U_{B} erfasst; dann kann die Steuereinrichtung 46 anhand der erfassten Batteriespannung U_{B} erkennen, ob die Fahrzeugbatterie 16 leer ist oder nicht.

Im Notbetrieb schaltet die Steuereinrichtung 46 die Schaltmittel 22 in den vierten Schaltzustand, in welchem der Primärpol 18 von dem Sekundärpol 26 elektrisch getrennt ist. Soll nun der Sicherheitsverbraucher in Betrieb genommen werden, so steuert die Steuereinrichtung 46 den Gleichspannungswandler 37 an, so dass die Versorgungsspannung U_{F} für den Sicherheitsverbraucher 33 erzeugt wird, nämlich aus der Spannung U_{S}. Auf diese Weise wird der Sicherheitsverbraucher 33 mit elektrischer Energie aus dem Doppelschichtkondensator 32 versorgt.

### Ladebetrieb:

In einem Ladebetrieb, in welchem der Doppelschichtkondensator 32 aufgeladen wird, erzeugt, der Generator 12 ebenfalls eine Spannung U_{G}= 14,5 Volt. In diesem Ladebetrieb werden die Schaltmittel 22 zwischen dem ersten und dem zweiten Schaltzustand abwechselnd geschaltet. Also verbleibt der erste Schalter 38 im Ladebetrieb geschlossen, während der zweite und der vierte Schalter 40, 44 abwechselnd geschaltet werden. Um die Bordnetzspannung U_{V} etwa auf U_{V}=U_{G} einzustellen, ist die Zeitdauer, während welcher der zweite Schalter 40 geschlossen ist, deutlich länger, als die, während welcher der vierte Schalter 44 geschlossen ist. Über die meiste Zeit wird also der Doppelschichtkondensator 32 überbrückt. Der Gleichspannungswandler 37 ist ausgeschaltet.

### Überspannungskompensation bei Lastabschaltung:

Es kommt zu einer Erhöhung der Generatorspannung U_{G} dann, wenn der Hochleistungsverbraucher 14 oder aber der Sicherheitsverbraucher 33 plötzlich abgeschaltet wird. Die Generatorspannung U_{G} kann sich beispielsweise von 14,5 Volt auf 17 Volt erhöhen. Der Generator 12 ist zu träge, um diese Spannungserhöhung schnell auszugleichen. Hier zeigt sich die Brückenschaltung einschließlich der Schaltmittel 22 und des Doppelschichtkondensators 32 hilfreich. Kommt es zu einer Überspannung zwischen dem Primärpol 18 und dem Bezugspotenzial 20, schaltet die Steuereinrichtung 46 die Schaltmittel 22 von dem zweiten Schaltzustand, in welchem der Doppelschichtkondensator 32 überbrückt ist, in den ersten Schaltzustand, in welchem der positive Anschluss 34 des Doppelschichtkondensators 32 mit dem Primärpol 18 gekoppelt ist. Dann gilt: U_{V}=U_{G}-U_{S}. Also wird die Bordnetzspannung U_{V} in diesem Falle auf den Wert von 14,5 Volt geregelt. Um bei einem 5 Volt - Doppelschichtkondensator 32 die Bordnetzspannung Uv auf diesen Wert einzustellen, kann es erforderlich sein, die Schaltmittel 22 abwechselnd zwischen dem ersten und dem zweiten Schaltzustand zu schalten. So kann nämlich ein beliebiger Mittelwert der Bordnetzspannung Uv erreicht werden. Dann wird die Bordnetzspannung U_{V} mittels des Tiefpassfilters einschließlich der Spule 24 und des Kondensators 28 geglättet. Es ist somit möglich, die Bordnetzspannung U_{V} in einem Wertebereich von U_{G} - U_{S} und U_{G} + U_{S} beliebig einzustellen. Der Gleichspannungswandler 37 ist ausgeschaltet.

### Unterspannungskompensation bei Lastzuschalten:

Wird der Hochleistungsverbraucher 14 oder aber der Sicherheitsverbraucher 33 eingeschaltet, so bricht die Generatorspannung U_{G} ein. Zum Beispiel kann die Generatorspannung U_{G} von 14,5 Volt auf 12 Volt einbrechen. Dann schaltet die Steuereinrichtung 46 die Schaltmittel 22 von dem zweiten Schaltzustand, in welchem der Doppelschichtkondensator 32 überbrückt ist, in den dritten Schaltzustand, in welchem der negative Anschluss 36 des Doppelschichtkondensators 32 mit dem Primärpol 18 verbunden ist. Um die Bordnetzspannung U_{V} auf 14,5 Volt zu regeln, kann es notwendig sein, die Schaltmittel 22 zwischen dem zweiten und dem dritten Schaltzustand abwechselnd zu schalten. Der Gleichspannungswandler 37 ist ausgeschaltet.

### Regenerationsbetrieb:

Mit dem Bordnetz 10 ist es auch möglich, einen Regenerationsbetrieb für die Fahrzeugbatterie 16 einzuleiten. In einem solchen Betrieb wird die Generatorspannung U_{G} für ein vorbestimmtes Zeitintervall auf einen solchen Wert eingestellt, der deutlich höher als die Nennspannung der Fahrzeugbatterie 16 liegt. Zum Beispiel kann die Generatorspannung U_{G} auf 17 Volt eingestellt werden. Während des Regenerationsbetriebs kann die Bordnetzspannung U_{V} zum Beispiel auf 14,5 Volt geregelt werden oder der Sekundärpol 26 kann von dem Primärpol 18 entkoppelt werden. Durch das Beaufschlagen der Fahrzeugbatterie 16 mit einer hohen Spannung steigt die wirksame Kapazität und sinkt der Innenwiderstand der Fahrzeugbatterie 16. Der Gleichspannungswandler 37 ist ausgeschaltet.

Insgesamt wird also ein Bordnetz 10 geschaffen, bei welchem ohne viel Aufwand mehrere Funktionen verwirklicht werden können. Durch Schaltmittel 22 kann sowohl eine Überspannung als auch eine Unterspannung kompensiert werden. Mithilfe lediglich eines Doppelschichtkondensators 32 kann einerseits die Bordnetzspannung U_{V} stabilisiert werden und andererseits der Sicherheitsverbraucher 33 redundant versorgt werden.

## Patentansprüche

1. Bordnetz (10) für ein Kraftfahrzeug, mit:
- einer Fahrzeugbatterie (16),
- einem elektrischen Verbraucher (30),
- einem Energiespeicher (32) mit einem positiven und einem negativen Anschluss (34, 36),
- Schaltmitteln (22), die in einem ersten Schaltzustand den positiven Anschluss (34) des Energiespeichers (32) mit der Fahrzeugbatterie (16) und den negativen Anschluss (36) des Energiespeichers (32) mit dem elektrischen Verbraucher (30) koppeln und in zumindest einen von dem ersten Schaltzustand verschiedenen weiteren Schaltzustand verbringbar sind, und
- einer Steuereinrichtung (46) zum Schalten der Schaltmittel (22) zwischen dem ersten und dem weiteren Schaltzustand,
**gekennzeichnet durch**
- einen weiteren elektrischen Verbraucher (33), insbesondere zum Bereitstellen einer Funktionalität, welche für die Sicherheit der Fahrzeuginsassen relevant ist, wobei der weitere Verbraucher (33) mit einer an der Fahrzeugbatterie (16) und/oder an dem elektrischen Verbraucher (30) anliegenden elektrischen Spannung (U_{B}, U_{V}, U_{G}) versorgbar ist und
- einen mit dem positiven und dem negativen Anschluss (34, 36) des Energiespeichers (32) einerseits und mit dem weiteren Verbraucher (33) andererseits gekoppelten Gleichspannungswandler (37), der eine am Energiespeicher (32) anliegende elektrische Spannung (U_{S}) abgreift und dazu ausgelegt ist, die abgegriffene Spannung (U_{S}) in eine Versorgungsspannung (U_{F}) umzuwandeln, mit welcher der weitere Verbraucher (33) redundant versorgbar ist.

2. Bordnetz (10) nach Anspruch 1, **dadurch gekennzeichnet, dass** der weitere Verbraucher (33) ein Elektromotor ist, insbesondere für eine Lenkeinrichtung oder ein Bremssystem des Kraftfahrzeugs.

3. Bordnetz (10) nach Anspruch 1 oder 2, **dadurch gekennzeichnet, dass** über die Schaltmittel (22) der weitere Verbraucher (33) mit der Fahrzeugbatterie (16) koppelbar ist.

4. Bordnetz (10) nach einem der vorhergehenden Ansprüche, **dadurch gekennzeichnet, dass** eine Entkoppelungseinrichtung (39, 51) zwischen dem weiteren Verbraucher (33) und der Fahrzeugbatterie (16) und/oder zwischen dem weiteren Verbraucher (33) und dem elektrischen Verbraucher (30) geschaltet ist, die dazu ausgelegt ist, einen Stromfluss von dem weiteren Verbraucher (33) hin zu der Fahrzeugbatterie (16) beziehungsweise zu dem elektrischen Verbraucher (30) zu unterbrechen.

5. Bordnetz (10) nach Anspruch 4, **dadurch gekennzeichnet, dass** die Entkopplungseinrichtung (39, 51) eine Diode (39, 51) beinhaltet, deren Kathode mit dem weiteren Verbraucher (33) und deren Anode mit der Fahrzeugbatterie (16) und/oder dem elektrischen Verbraucher (30) gekoppelt sind.

6. Bordnetz (10) nach einem der vorhergehenden Ansprüche, **dadurch gekennzeichnet, dass** der Gleichspannungswandler (37) einen Hochsetzsteller umfasst, der dazu ausgebildet ist, für den weiteren Verbraucher (33) die Versorgungsspannung (U_{F}) mit einer Amplitude bereitzustellen, die größer als die Amplitude der abgegriffenen Spannung (U_{S}), insbesondere gleich dem Nennspannungswert (12 Volt) der Fahrzeugbatterie (16), ist.

7. Bordnetz (10) nach einem der vorhergehenden Ansprüche, **dadurch gekennzeichnet, dass** die Steuereinrichtung (46) dazu eingerichtet ist, nach Erkennen eines entladenen Zustands der Fahrzeugbatterie (16) die Schaltmittel (22) in einen Schaltzustand zu verbringen, in welchem der Energiespeicher (32) sowohl von der Fahrzeugbatterie (16) als auch von dem elektrischen Verbraucher (30) elektrisch entkoppelt ist, so dass eine im Energiespeicher (32) gespeicherte Energie für den weiteren Verbraucher (33) zur Verfügung steht.

8. Bordnetz (10) nach einem der vorhergehenden Ansprüche, **dadurch gekennzeichnet, dass** die Schaltmittel (22)
- in einem zweiten Schaltzustand die Fahrzeugbatterie (16) mit dem elektrischen Verbraucher (30) koppeln, so dass der Energiespeicher (32) überbrückt ist, und/oder
- in einem dritten Schaltzustand den positiven Anschluss (34) des Energiespeichers (32) mit dem elektrischen Verbraucher (30) und den negativen Anschluss (36) des Energiespeichers (32) mit der Fahrzeugbatterie (16) koppeln, und/oder
- in einem vierten Schaltzustand den elektrischen Verbraucher (30) von der Fahrzeugbatterie (16) trennen.

9. Kraftfahrzeug mit einem Bordnetz (10) nach einem der vorhergehenden Ansprüche.

10. Verfahren zum Betreiben eines elektrischen Bordnetzes (10) eines Kraftfahrzeugs, wobei eine Spannungserzeugungseinheit (12, 16), die eine elektrische Spannung (U_{B}, U_{G}) bereitstellt, ein Energiespeicher (32) und ein elektrischer Verbraucher (30) bereitgestellt sind, und wobei für zumindest ein vorbestimmtes erstes Zeitintervall der Energiespeicher (32) derart mit dem Verbraucher (30) und der Spannungserzeugungseinheit (12, 16) gekoppelt wird, dass die am Verbraucher (30) anliegende Spannung (U_{V}) niedriger als die Spannung (U_{B}, U_{G}) der Spannungsversorgungseinheit (12, 16) ist, **dadurch gekennzeichnet, dass** ein weiterer elektrischer Verbraucher (33), der insbesondere zum Bereitstellen einer Funktionalität ausgebildet ist, welche für die Sicherheit der Fahrzeuginsassen relevant ist, mit der Spannung (U_{B}, U_{V}, U_{G}) der Spannungserzeugungseinheit (12, 16) versorgt wird, und dass ein Gleichspannungswandler (37) eine am Energiespeicher bereitgestellte Spannung (U_{S}) abgreift und in eine Versorgungsspannung (U_{F}) umwandelt, mit welcher der weitere Verbraucher (33) redundant versorgt wird.

## Claims

1. On-board electrical system (10) for a motor vehicle, comprising:
- a vehicle battery (16),
- an electrical load (30),
- an energy storage device (32) having a positive terminal and a negative terminal (34, 36),
- switching means (22) which, in a first switching state, couple the positive terminal (34) of the energy storage device (32) to the vehicle battery (16) and the negative terminal (36) of the energy storage device (32) to the electrical load (30) and can be switched into at least one additional switching state that is different from the first switching state, and
- a control device (46) for switching the switching means (22) between the first and the additional switching state,
**characterised by**
- an additional electrical load (33), in particular for providing functionality which is relevant to the safety of the vehicle occupants, the additional load (33) being able to be supplied with a voltage (U_{B}, U_{V}, U_{G}) which is present at the vehicle battery (16) and/or at the electrical load (30) and
- a DC-DC converter (37) which is coupled, on one hand, to the positive and the negative terminal (34, 36) of the energy storage device (32) and, on the other hand, to the additional load (33), taps a voltage (U_{S}) which is present at the energy storage device (32) and is configured to convert the tapped voltage (U_{S}) into a supply voltage (U_{F}), which can be redundantly supplied to the additional load (33).

2. On-board electrical system (10) according to claim 1, **characterised in that** the additional load (33) is an electric motor, more particularly for a steering device or a braking system of the motor vehicle.

3. On-board electrical system (10) according to either claim 1 or claim 2, **characterised in that** the additional load (33) can be coupled to the vehicle battery (16) by means of the switching means (22).

4. On-board electrical system (10) according to any of the preceding claims, **characterised in that** a decoupling device (39, 51) is connected between the additional load (33) and the vehicle battery (16) and/or between the additional load (33) and the electrical load (30), and is configured to interrupt current flow from the additional load (33) to the vehicle battery (16) and/or from the additional load to the electrical load (30).

5. On-board electrical system (10) according to claim 4, **characterised in that** the decoupling device (39, 51) includes a diode (39, 51), the cathode thereof being coupled to the additional load (33) and the anode thereof being coupled to the vehicle battery (16) and/or the electrical load (30).

6. On-board electrical system (10) according to any of the preceding claims, **characterised in that** the DC-DC converter (37) comprises a boost converter which, for the additional load (33), is configured to provide the supply voltage (U_{F}) with an amplitude that is greater than the amplitude of the tapped voltage (U_{S}), more particularly equal to the nominal voltage value (12 volts) of the vehicle battery (16).

7. On-board electrical system (10) according to any of the preceding claims, **characterised in that** the control device (46) is configured to switch the switching means (22), after detecting a discharged state of the vehicle battery (16), into a switching state in which the energy storage device (32) is electrically decoupled from both the vehicle battery (16) and the electrical load (30), so that energy stored in the energy storage device (32) is made available for the additional load (33).

8. On-board electrical system (10) according to any of the preceding claims, **characterised in that** the switching means (22):
- in a second switching state, couple the vehicle battery (16) to the electrical load (30), so that the energy storage device (32) is bypassed, and/or
- in a third switching state, couple the positive terminal (34) of the energy storage device (32) to the electrical load (30) and the negative terminal (36) of the energy storage device (32) to the vehicle battery (16), and/or
- in a fourth switching state, disconnect the electrical load (30) from the vehicle battery (16).

9. Motor vehicle comprising an on-board electrical system (10) according to any of the preceding claims.

10. Method for operating an on-board electrical system (10) of a motor vehicle, a voltage-generating unit (12, 16) which provides a voltage (U_{B}, U_{G}), an energy storage device (32) and an electrical load (30) being provided, the energy storage device (32) being coupled to the load (30) and the voltage-generating unit (12, 16) for at least a predetermined first time interval in such a way that the voltage (U_{V}) which is present at the load (30) is lower than the voltage (U_{B}, U_{G}) of the voltage supply unit (12, 16), **characterised in that** an additional electrical load (33), which is configured in particular for providing a functionality which is relevant to the safety of the vehicle occupants, is supplied with the voltage (U_{B}, U_{V}, U_{G}) of the voltage-generating unit (12, 16), and **in that** a DC-DC converter (37) taps a voltage (U_{S}) provided at the energy storage device and converts said tapped voltage into a supply voltage (U_{F}), which is redundantly supplied to the additional load (33).

## Revendications

1. Réseau de bord (10) pour un véhicule automobile, comprenant :
- une batterie de véhicule (16),
- un récepteur électrique (30),
- un accumulateur d'énergie (32) avec une borne positive et une borne négative (34, 36),
- des moyens de commutation (22) qui, dans un premier état de commutation, couplent la borne positive (34) de l'accumulateur d'énergie (32) à la batterie (16) du véhicule et la borne négative (36) de l'accumulateur d'énergie (32) au récepteur électrique (30) et peuvent être amenés dans au moins un autre état de commutation différent du premier état de commutation, et
- un dispositif de commande (46) pour commuter les moyens de commutation (22) entre le premier et le second état de commutation,
**caractérisé par** :
- un autre récepteur électrique (33), en particulier pour fournir une fonctionnalité qui soit pertinente pour la sécurité des occupants de la voiture, dans lequel l'autre récepteur (33) peut être alimenté par une tension électrique (U_{B}, U_{V}, U_{G}) aux bornes de la batterie (16) du véhicule et/ou du récepteur électrique (30), et
- un convertisseur de tension continue (37) couplé à la borne positive et à la borne négative (34, 36) de l'accumulateur d'énergie (32), d'une part, et à l'autre récepteur électrique (33), d'autre part, lequel convertisseur prélève une tension électrique (U_{S}) aux bornes de l'accumulateur d'énergie (32) et est dimensionné de sorte à convertir la tension prélevée (U_{S}) en une tension d'alimentation (U_{F}) par laquelle l'autre récepteur (33) peut être alimenté de manière redondante.

2. Réseau de bord (10) selon la revendication 1, **caractérisé en ce que** l'autre récepteur (33) est un moteur électrique, en particulier pour un dispositif de direction ou un système de freinage du véhicule automobile.

3. Réseau de bord (10) selon la revendication 1 ou la revendication 2, **caractérisé en ce que** l'autre récepteur (33) peut être couplé à la batterie (16) du véhicule via les moyens de commutation (22).

4. Réseau de bord (10) selon l'une quelconque des revendications précédentes, **caractérisé en ce que** l'on commute entre l'autre récepteur (33) et la batterie (16) du véhicule et/ou entre l'autre récepteur (33) et le récepteur électrique (30) un dispositif de désaccouplement (39, 51) qui est dimensionné en sorte d'interrompre un flux de courant de l'autre récepteur (33) à la batterie (16) du véhicule, éventuellement au récepteur électrique (30).

5. Réseau de bord (10) selon la revendication 4, **caractérisé en ce que** le dispositif de désaccouplement (39, 51) contient une diode (39, 51), dont la cathode est couplée à l'autre récepteur (33) et dont l'anode est couplée à la batterie (16) du véhicule et/ou au récepteur électrique (30).

6. Réseau de bord (10) selon l'une quelconque des revendications précédentes, **caractérisé en ce que** le convertisseur de tension continue (37) comprend un convertisseur élévateur qui est dimensionné en sorte de fournir pour l'autre récepteur (33) la tension d'alimentation (U_{F}) avec une amplitude qui soit supérieure à l'amplitude de la tension prélevée (U_{S}), en particulier égale à la valeur de tension nominale (12 volts) de la batterie (16) du véhicule.

7. Réseau de bord (10) selon l'une quelconque des revendications précédentes, **caractérisé en ce que** le dispositif de commande (46) est monté en sorte, après identification d'un état déchargé de la batterie (16) du véhicule, d'amener les moyens de commutation (22) dans un état de commutation, dans lequel l'accumulateur d'énergie (32) est électriquement désaccouplé autant de la batterie (16) du véhicule que du récepteur électrique (30) de sorte que l'on dispose d'une énergie stockée dans l'accumulateur d'énergie (32) pour l'autre récepteur (33).

8. Réseau de bord (10) selon l'une quelconque des revendications précédentes, **caractérisé en ce que** les moyens de commutation (22),
- dans un deuxième état de commutation, couplent la batterie (16) du véhicule au récepteur électrique (30) de sorte que l'accumulateur d'énergie (32) soit court-circuité, et/ou,
- dans un troisième état de commutation, couplent la borne positive (34) de l'accumulateur d'énergie (32) au récepteur électrique (30) et la borne négative (36) de l'accumulateur d'énergie (32) à la batterie (16) du véhicule, et/ou,
- dans un quatrième état de commutation, séparent le récepteur électrique (30) de la batterie (16) du véhicule.

9. Véhicule automobile équipé d'un réseau de bord (10) selon l'une quelconque des revendications précédentes.

10. Procédé d'exploitation d'un réseau de bord électrique (10) d'un véhicule automobile, dans lequel une unité génératrice de tension (12, 16), qui fournit une tension électrique (U_{B}, U_{G}), un accumulateur d'énergie (32) et un récepteur électrique (30) sont mis en oeuvre, dans lequel, pendant au moins un premier intervalle de temps prédéterminé, l'accumulateur d'énergie (32) est couplé au récepteur (30) et à l'unité génératrice de tension (12, 16) de sorte que la tension (U_{V}) aux bornes du récepteur (30) soit plus petite que la tension (U_{B}, U_{G}) de l'unité d'alimentation en tension (12, 16), **caractérisé en ce qu'**un autre récepteur électrique (33), qui est conformé en particulier pour fournir une fonctionnalité qui soit pertinente pour la sécurité des occupants de la voiture, est alimenté par la tension (U_{B}, U_{V}, U_{G}) de l'unité génératrice de tension (12, 16) et **en ce qu'**un convertisseur de tension continue (37) prélève une tension (U_{S}) fournie dans l'accumulateur d'énergie et la convertit en une tension d'alimentation (U_{F}) par laquelle l'autre récepteur (33) peut être alimenté de manière redondante.
